# EUROPÄISCHE PATENTSCHRIFT

(11) **EP 3 931 992 B1**
(45) Veröffentlichungstag und Bekanntmachung des Hinweises auf die Patenterteilung: **16.11.2022**
(21) Anmeldenummer: 20705022.0
(22) Anmeldetag: 10.02.2020
(51) Int. Cl.: H04L 1/00, G01S 5/02, H04W 4/029

(54) **VERFAHREN UND STEUERVORRICHTUNG ZUM KONFIGURIEREN EINER KANALKODIERUNG WÄHREND EINER ÜBERTRAGUNG VON DATENPAKETEN VON EINEM SENDEGERÄT HIN ZU EINEM EMPFÄNGERGERÄT SOWIE KRAFTFAHRZEUG**
METHOD AND CONTROL APPARATUS FOR CONFIGURING A CHANNEL CODING DURING A TRANSMISSION OF DATA PACKETS FROM A TRANSMITTER TO A RECEIVER, AND MOTOR VEHICLE
PROCÉDÉ ET DISPOSITIF DE COMMANDE POUR LA CONFIGURATION D'UN CODAGE DE CANAL PENDANT UNE TRANSMISSION DE PAQUETS DE DONNÉES D'UN ÉMETTEUR EN DIRECTION D'UN RÉCEPTEUR, AINSI QUE VÉHICULE AUTOMOBILE

(30) Priorität: 09.05.2019 DE 102019206666
(43) Veröffentlichungstag der Anmeldung: 05.01.2022
(73) Patentinhaber: AUDI AG, 85045 Ingolstadt (DE)
(72) Erfinder: HEHN, Thorsten, 85055 Ingolstadt (DE); STADLER, Christina, 85116 Egweil (DE)
(74) Vertreter: Hofstetter, Schurack & Partner
(86) Internationale Anmeldenummer: PCT/EP2020/053291
(87) Internationale Veröffentlichungsnummer: WO 2020/224816

(56) Entgegenhaltungen:
- DE-A1-102015 214 968
- US-B1- 7 840 220

## Beschreibung

Die Erfindung betrifft ein Verfahren zum Konfigurieren einer Kanalkodierung, die während einer Übertragung von Datenpaketen benutzt wird. Die Datenpakete werden von einem Sendegerät aus hin zu einem Empfängergerät übertragen, wobei sich beide in einer Verkehrsumgebung befinden und wobei sich zumindest eines bewegt. Beispielsweise kann das Sendegerät in einem Sendefahrzeug und/oder das Empfängergerät in einem Empfängerfahrzeug angeordnet sein. Die Erfindung umfasst auch ein Kraftfahrzeug, welches als Sendefahrzeug betrieben werden kann. Schließlich umfasst die Erfindung auch eine Steuervorrichtung, mittels welcher ein Sendegerät gemäß dem Verfahren betrieben werden kann.

Bei der Übertragung von Datenpaketen kann es aufgrund von Störungen auf der Funkstrecke zu einer Verfälschung der Sendesignale kommen, was in einem Empfängergerät dazu führen kann, dass die in dem Datenpaket enthaltenen Daten nicht mehr korrekt rekonstruiert werden können, weil eine ungekannte Anzahl von Datenbits gekippt ist. Dies kann beispielsweise anhand einer Prüfsumme erkannt werden. Es gibt auch die Möglichkeit, die Daten in Datenpaketen mittels einer sogenannten Vorwärtsfehlerkorrektur (Forward Error Correction) rekonstruierbar zu machen, falls die Verfälschung ausreichend gering ist. Allgemein wird dieses Vorsehen von zusätzlicher Redundant (zusätzliche Bits) als Kanalkodierung bezeichnet. Kann auch dann das Datenpaket nicht vollständig rekonstruiert werden, so kann das erneute Aussenden des Datenpakets von dem Empfängergerät bei dem Sendergerät angefragt oder angefordert werden, was als ARQ (Automatic Repeat Request) bezeichnet wird. Ist das Sendergerät dann über die Schwierigkeiten beim Dekodieren der Datenpakete informiert, so kann es zum einen ein Datenpaket erneut senden und zum anderen adaptiv die Konfiguration der Kodierung anpassen, um zukünftige Übertragungsfehler zu vermeiden. Diese Kombination aus adaptiver Kodierung und erneutem Übertragen von nicht-rekonstruierbaren Datenpaketen wird als hybrides ARQ (HARQ - Hybrid Automatic Repeat Request) bezeichnet. Unter einem HARQ-Prozess versteht man also eine Methodik, bei welcher die Kanalkodierung und das zusätzliche Übermitteln von Redundanz zusammenwirken, um die Wahrscheinlichkeit einer erfolgreichen Dekodierung der übertragenen Information oder Datenpakete zu erhöhen.

Eine Weiterentwicklung hierzu ist das Blind-HARQ, wo die zusätzliche Redundanz in der Kanalkodierung nicht gezielt von dem Empfänger angefordert wird, sondern der originalen Übertragung nach einer Entscheidung des Sendergeräts eingefügt wird. Hierbei kann sich also zusätzliche Redundanz (zusätzliche Datenbits, die in den Datenpaketen übertragen werden) ergeben, die unter Umständen nicht notwendig ist. Diese zusätzliche Redundanz im Blind-HARQ-Prozess resultiert damit in einer erhöhten Auslastung des Kommunikationskanals, das heißt Nutzdaten können nur in geringerer Übertragungsrate übertragen werden. Zudem führt die steigende Kanallast dazu, dass andere Sendergeräte nur in geringerem Maß auf den Sendekanal zugreifen können, da die Gefahr einer Paketkollision zunimmt, was wiederum zu einer fehlerhaften Übertragung der übertragenen Datenpakete führen kann, also kontraproduktiv auf den Schutz der Datenpakete wirkt.

Aus der JP 2003 198 441 A ist bekannt, eine direktive Sendeantenne derart auszurichten, dass ein Empfängerfahrzeug auch dann noch einen ausreichenden Funkempfang hat, wenn sich zwischen Sendeantenne und Empfängerfahrzeug ein abschirmendes Objekt befindet. Wo sich abschirmende Objekte befinden, kann mittels einer Karte im Voraus angegeben werden. Nachteilig bei dieser Lösung ist, dass die Karte aufwändig für jede Region individuell ermittelt werden muss.

Aus der WO 2017/027355 A1 ist bekannt, bei einer direkten Kommunikation zwischen mobilen Endgeräten mittels D2D-LTE (Device to Device Long Term Evolution) im Sendergerät und im Empfängergerät zwischen unterschiedlichen Konfigurationsdatensätzen umzuschalten. Dies kann auch in Abhängigkeit von einer aktuellen Position eines der Geräte erfolgen. Die Übertragung kann mittels des beschriebenen HARQ-Prozesses durchgeführt werden. Auch dies erfordert es aber, ein Gebiet lückenlos zu vermessen, um die korrekte Auswahl zu ermöglichen. Die Auswahl kann auch in Abhängigkeit von weiteren Zustandsparametern der Funkstrecke erfolgen, die aber erst im Nachhinein gemessen werden können, wenn es bereits zu einer Übertragung eines Datenpakets gekommen ist, sodass für eine Datenpaket eine vorsorgliche Konfiguration der Kanalkodierung möglich ist.

Aus der US 8,682,265 B2 ist bekannt, für unterschiedliche Funkstrecken (direkte Sicht, über den Horizont hinweg, hin zu einem fliegenden Objekt) in Abhängigkeit davon umzuschalten, wo sich das Empfängergerät aktuell befindet und ob sich das Empfängergerät aktuell bewegt. Eine Adaption der Kanalkodierung ergibt sich nur regionsweise, d.h. bei gleicher Umgebung und lediglich variierender Relativposition zwischen Sendergerät und Empfängergerät ergibt sich keine Adaptionsmöglichkeit.

Die DE 10 2015 214 968 A1 offenbart ein Verfahren und eine Vorrichtung, die zur Anpassung mindestens eines Parameters eines Kommunikationssystems zwischen zwei Teilnehmern verwendet werden. Sie beschreibt, dass digitale Kommunikation verschiedene Mechanismen nutzt, um sich auf den aktuellen Kanal zwischen Sender und Empfänger einzustellen. Zunächst wird der Kanal zwischen Sender und Empfänger geschätzt, und dann stellt nachfolgend, je nach Lage der Teilnehmer in einem Umfeldmodell, der Sender Parameter des Kommunikationssystems ein um sich den gegebenen Kanal einzustellen. Als Parameter werden hier Sendestärke, ein Modulationsalphabet, oder die Informationsrate herangezogen.

Die US 7 840 220 B1 zeigt ein Kommunikationsnetz mit asymmetrischen Kanälen, welches eine Datenanforderung von einem mobilen Client über einen Schmalbandkanal empfängt und Breitbanddaten über einen Breitbandkanal an den mobilen Client liefert. Die Stärke des Kommunikationsnetzwerks basiert auf der Position des mobilen Clients oder der geschätzten Position und historischen Kanalleistungsstatistiken, die vom mobilen Client über einen bestimmten Zeitraum gemessen und mit Datenanforderungen an den Server gesendet werden.

Die US 7 813 742 B1 beschreibt ein Verfahren zur Kanaloptimierung in dem ein Prozessor die übermittelten Parameter eines RF-Sendeempfängers auf der Grundlage derPositionsdaten und der topographischen Daten optimiert. Der Prozessor kann hierbei die line-of-sight, LOS, Daten (Sichtverbindungsdaten) und die GIS-Daten(geographische Informationsdaten) verwenden um einen Verbindungsverlustwert zu berechnen, der die geschätzte Signalverschlechterung für den Hochleistungskanal darstellt.

Der Erfindung liegt die Aufgabe zugrunde, eine Adaption oder Konfiguration einer Kanalkodierung mit geringem Bedarf an Datenaustausch zwischen Sendergerät und Empfängergerät durchzuführen.

Die Aufgabe wird durch die Gegenstände der unabhängigen Patentansprüche gelöst. Vorteilhafte Ausführungsformen der Erfindung sind durch die abhängigen Patentansprüche, die folgende Beschreibung sowie die Figuren beschrieben.

Durch die Erfindung ist ein Verfahren bereitgestellt, um eine Kanalkodierung während einer Übertragung von Datenpaketen von einem Sendegerät hin zu einem Empfängergerät zu parametrieren oder zu konfigurieren. Das Verfahren geht davon aus, dass sich beide Geräte, also Sendegerät und Empfängergerät, in einer Verkehrsumgebung befinden, also beispielsweise auf einem Straßennetz, und sich von beiden Geräten zumindest eines bewegt. Das Sendegerät und/oder das Empfängergerät kann also in einem jeweiligen Kraftfahrzeug angeordnet sein. Bei der Bewegung geht es insbesondere um eine Relativbewegung zwischen Sendegerät und Empfängergerät sowie um eine Bewegung durch die Verkehrsumgebung hindurch, wodurch sich die Eigenschaft des zwischen dem Sendegerät und dem Empfängergerät bestehenden Funckanals mit der Zeit verändert. Das Verfahren wird durch eine Steuervorrichtung des Sendegeräts durchgeführt. Durch die Steuervorrichtung werden zum einen Umgebungsdaten ermittelt, welche eine vorbestimmte Umgebungsbeschaffenheit der Verkehrsumgebung beschreiben. Beispielsweise können die Umgebungsdaten eine durchschnittliche Bebauungsdichte angeben. Insbesondere wird also von einer statistischen oder mittleren Umgebungseigenschaft ausgegangen. Zum anderen werden durch die Steuervorrichtung Lagedaten ermittelt, welche eine Relativlage des Sendegeräts und des Empfängergeräts zueinander beschreiben. Es geht also bei diesen Lagedaten nicht um eine absolute Geoposition der Geräte, sondern um deren Relativlage. Durch die Umgebungsdaten und die Lagedaten ist also in der Steuervorrichtung bekannt, in welchem Umgebungstyp (beispielsweise Stadt oder offenes Land) und in welcher Relativposition oder Relativlage die Geräte sich befinden. Anhand der Umgebungsdaten und der Lagedaten wird durch die Steuervorrichtung mittels eines vorbestimmten Funkstreckenmodells prognostiziert, ob sich mit einer aktuell eingestellten Kodierkonfiguration der Kanalkodierung, also mit dem aktuell verwendeten Konfigurationsdatensatz, ein aktuell zu versendendes Datenpaket der Datenpakete auch tatsächlich in dem Empfängergerät erfolgreich dekodieren und/oder rekonstruieren lässt. Mit anderen Worten wird mittels des Funkstreckenmodells ermittelt, ob eine Störung des Datenpakets, die sich nach dem Aussenden des Datenpakets auf der Funkstrecke ergeben kann, derart stark oder groß sein kann, dass sich die Daten des Datenpakets in dem Empfängergerät nicht mehr vollständig oder fehlerfrei rekonstruieren lassen, also das übermittelte Datenpaket unbrauchbar ist. Mit Rekonstruieren ist gemeint, dass auch eine Fehlerkorrektur einbezogen sein kann, um zu entscheiden, ob das Datenpaket korrekt wieder hergestellt werden kann. Bevor also die Steuervorrichtung das Datenpaket aussendet, entscheidet sie schon mittels des Funkstreckenmodells, ob die aktuelle Kodierkonfiguration für die Kanalkodierung ausreichend ist. Eine Kodierkonfiguration der Kanalkodierung kann beispielsweise einen Grad der Redundanz für die Kanalkodierung festlegen, also beispielsweise die Anzahl der Paritätsbits und/oder eine Art des verwendeten Codes. Eine Kodierkonfiguration kann durch einen jeweiligen Wert für zumindest einen Kodierparameter der Kanalkodierung definiert sein.

Falls die Prognose betreffend das erfolgreiche Dekodieren und/oder Rekonstruieren keinen Erfolg, sondern einen Misserfolg, signalisiert, also von einem nicht-dekodierbaren und/oder nicht-rekonstruierbaren Datenpaket auszugehen ist, so wird durch die Steuervorrichtung auf eine andere Kodierkonfiguration umgeschaltet, die hier als erweiterte Kodierkonfiguration bezeichnet ist, weil sie eine größere Redundanz bei der Kanalkodierung des Datenpakets vorsieht als die aktuelle Kodierkonfiguration. Entsprechende Kodierkonfigurationen, also z.B. Parametereinstellungen, können je nach Kanalkodierverfahren aus dem Stand der Technik entnommen werden. Durch die Steuervorrichtung wird also auf die erweiterte Kodierkonfiguration umgeschaltet, falls die Prognose keinen Erfolg signalisiert. Das zu versendende Datenpaket wird dann mit der erweiterten Kodierkonfiguration kodiert und versendet. Die Steuervorrichtung in dem Sendegerät kann also ohne eine Rückmeldung von dem Empfängergerät entscheiden, welche Kodierkonfiguration für das Senden des nächsten Datenpakets geeignet ist, um eine erfolgreiche Dekodierung und/oder Rekonstruktion der Daten des Datenpakets in dem Empfängergerät sicherzustellen. Die Lagedaten kann das Sendegerät beispielsweise von dem Empfängergerät aus einer vorangegangenen Datenübertragung vom Empfängergerät zum Sendegerät hin erfahren oder ermitteln. Indem aber keine Rückmeldungen in Bezug auf das erfolgreiche Dekodieren und/oder Rekonstruieren notwendig ist, kann mit geringerer Datenrate eine Kodierkonfiguration in dem Sendegerät festgelegt werden. Das Verfahren eignet sich insbesondere zum Konfigurieren einer Kanalkodierung für eine Mobilfunk-Datenkommunikation, beispielsweise die sogenannte V2X-Kommunikation zwischen einem Fahrzeug und einem anderen Gerät, beispielsweise einem anderen Kraftfahrzeug oder einer Infrastrukturkomponente eines Straßennetzes. Die Datenübertragung kann auf einem Mobilfunkstandard, wie beispielsweise LTE oder 5G, und/oder auf einem WLAN-Standard (WLAN - Wireless Local Area Network) beruhen. Das Verfahren kann im Rahmen eines Blind-HARQ-Prozesses durchgeführt werden, das heißt, das nochmalige Senden eines Datenpakets (ARQ) oder das Nachsenden zusätzlicher Redundanzdaten auf Anfrage des Empfängergeräts hin kann vorgesehen sein.

Um eine statistische Aussage über den Erfolg der Dekodierung/Rekonstruktion des Datenpakets zu machen, ist vorgesehen, dass das besagte Funkstreckenmodell umfasst, dass das Vorhandensein oder Nicht-Vorhandensein einer direkten Sichtverbindung zwischen Sendegerät und Empfängergerät überprüft wird, also eine Entscheidung betreffend das Bestehen einer direkten Sichtverbindung erzeugt wird und in Abhängigkeit von einem Bestehen der direkten Sichtverbindung (wie es die Entscheidung angibt oder signalisiert) ein Parameter einer Berechnungsvorschrift für eine entfernungsabhängige Erfolgswahrscheinlichkeit eingestellt wird. Es wird also in dem Funkstreckenmodell eine Berechnungsvorschrift zugrunde gelegt, die in Abhängigkeit von der Entfernung zwischen Sendegerät und Empfängergerät, wie sie durch die Lagedaten signalisiert sein kann, festlegt, wie hoch die Erfolgswahrscheinlichkeit betreffend das Dekodieren und/oder Rekonstruieren ist. Eine solche Berechnungsvorschrift kann an sich aus dem Stand der Technik entnommen werden, allerdings benötigt diese einen aktuellen Parameterwert für den Parameter betreffend das Bestehen der direkten Sichtverbindung, wie sie nun mittels des Funkstreckenmodells erkannt werden kann. Eine direkte Sichtverbindung meint hierbei, dass die Funkstrecke reflexionsfrei erfolgt, also keine Reflexion beispielsweise an einer Gebäudewand und/oder eines Blechs eines anderen Fahrzeugs benötigt.

Erfindungsgemäß wird hierbei das Bestehen der Sichtverbindung in dem Funkstreckenmodell mittels eines künstlichen neuronalen Netzwerks geprüft oder ermittelt. Hierzu wird ein künstliches neuronales Netzwerk verwendet, welches darauf trainiert ist, den ermittelten Umgebungsdaten und Lagedaten (beide stellen Eingabedaten des neuronalen Netzwerkes dar) Aussagedaten zuzuordnen (die Aussagedaten stellen Ausgabedaten des neuronalen Netzwerks dar). Die Aussagedaten betreffen dabei die Wahrscheinlichkeit des Bestehens der Sichtverbindung. Es hat sich herausgestellt, dass mittels eines Trainings eines künstlichen neuronalen Netzwerks eine Prognose oder Analyse dahingehend bereitgestellt werden kann, dass Aussagedaten betreffend das Bestehen einer Sichtverbindung allein auf Grundlage von Umgebungsdaten und Lagedaten erzeugt werden können. So hat sich beispielsweise herausgestellt, dass unabhängig von einem Umgebungstyp das Bestehen einer Sichtverbindung durch ein künstliches neuronales Netzwerk allein schon daran erkannt werden kann, wenn das Sendegerät und das Empfängergerät unmittelbar hintereinander angeordnet sind (Sichtrichtungswinkel 0 Grad oder 180 Grad), wenn es sich um eine Datenübertragung zwischen zwei Fahrzeugen handelt, also das Sendegerät in einem Sendefahrzeug und das Empfängergerät in einem Empfängerfahrzeug angeordnet sind. Ein Sichtrichtungswinkel zwischen 0 Grad und 180 Grad, das heißt eine schräge Verbindungslinie, ergibt dagegen mit hoher Wahrscheinlichkeit eine fehlende direkte Sichtverbindung, falls als Umgebungstyp eine Stadtbebauung vorliegt, was ebenfalls zuverlässig durch ein künstliches neuronales Netzwerk zugeordnet werden kann. Diese Beispiele sind aber sehr stark vereinfacht, um zu veranschaulichen, dass die Wahrscheinlichkeit für eine bestehende Sichtverbindung unter einem Sichtrichtungswinkel von 0 Grad oder 180 Grad gegenüber anderen Winkeln hoch ist. Der absolute Wahrscheinlichkeitswert wird jedoch wiederum von dem Umgebungstyp beeinflusst. Somit ist das Bestehen einer Sichtverbindung unter diesen Bedingungen nicht komplett unabhängig vom Umgebungstyp. Beispiel: Je dichter das Gebiet bebaut ist, je mehr Kreuzungen es enthält (insbesondere T-Kreuzungen) und je kürzer die Straßen (zwischen Kreuzungen) sind, umso höher ist die Wahrscheinlichkeit, dass die Sichtverbindung auch unter einem Sichtrichtungswinkel von 0 Grad oder 180 Grad behindert ist. Diese Wahrscheinlichkeit steigt natürlich mit zunehmender Distanz zwischen Sender und Empfänger. Als dies kann sehr effizient mittels eines neuronalen Netzwerks berücksichtigt werden. Anstelle eines neuronalen Netzwerks oder zusätzlich dazu kann beispielsweise auch auf eine Look-up-Tabelle und/oder ein Datenmodell genutzt werden.

Die Erfindung umfasst auch Ausführungsformen, durch die sich zusätzliche Vorteile ergeben.

In einer Ausführungsform geben die besagten Umgebungsdaten eine oder mehrere oder jede der folgenden Umgebungsbeschaffenheiten an: eine Bebauungsdichte, eine mittlere Gebäudehöhe, einen Bebauungstyp der Verkehrsumgebung. Solche Umgebungsbeschaffenheiten können beispielsweise aus einer Straßenkarte oder einer Navigationskarte eines Navigationssystems eines Kraftfahrzeugs entnommen werden. Insbesondere ist vorgesehen, dass die Umgebungsdaten einen statistischen Mittelwert der Beschaffenheit der Umgebung zwischen Sendegerät und Empfängergerät beschreiben. Es ist somit keine exakte Beschreibung einzelner Gebäude notwendig. Hierdurch kann das Verfahren ohne vorherige exakte Vermessung eines Gebiets oder einer Verkehrsumgebung genutzt werden. Zusätzlich oder alternativ den genannten Umgebungsdaten (Bebauungsdichte, eine mittlere Gebäudehöhe, einen Bebauungstyp) sind weitere sinnvoll nutzbar:
- Durchschnittliche Straßenlänge [Meter]
- Anzahl der Straßen
- Anzahl der Kurven
- Anzahl der Kreuzungen
- Anteil des Straßennetzes an der Landschaftsfläche oder Szenarienfläche [Prozent]
- Durchschnittliche Gebäudegrundfläche [Quadratmeter]
- Anzahl der Gebäude.

Anzahl meint hier insbesondere eine mittlere Anzahl pro vorgebebener Flächeneinheit, z.B. pro Quadratkilometer.

In einer Ausführungsform betreffen die Lagedaten die Relativlage in Bezug auf zumindest eine oder mehrere oder alle der folgenden Angaben: eine relative Sichtrichtung in Form eines Sichtrichtungswinkels (beispielsweise gemessen in einer horizontalen Ebene), einen Höhenunterschied zwischen Sendegerät und Empfängergerät, eine Entfernung zwischen Sendegerät und Empfängergerät. Der Sichtrichtungswinkel kann beispielsweise bezüglich einer Vorausrichtung des Sendegeräts oder des Empfängergeräts gemessen werden, also als Winkel zwischen der Längsachse oder Vorausachse (Vorwärtsfahrtrichtung) und der Linie zwischen Sendegerät und Empfängergerät. Ein Sichtrichtungswinkel von 0 Grad würde dann angeben, dass sich das Empfängergerät in einer geraden Linie vor dem Sendegerät befindet, ein Sichtrichtungswinkel von 90 Grad vom Sendegerät würde angeben, dass sich das Empfängergerät querab rechts neben dem Sendegerät befindet. Es hat sich herausgestellt, dass diese Lagedaten bei Kenntnis der Umgebungsbeschaffenheit ausreichen, um eine statistische Aussage über den Erfolg betreffend das Dekodieren und/oder Rekonstruieren eines Datenpakets zu ermitteln.

Liegt eine Wahrscheinlichkeit des Bestehens der Sichtverbindung vor, so muss noch eine konkrete Entscheidung für den vorliegenden Fall erzeugt werden. In einer Ausführungsform ist hierzu in dem Funkstreckenmodell dem künstlichen neuronalen Netzwerk (welches die Wahrscheinlichkeit des Bestehens der direkten Sichtverbindung durch die Aussagedaten signalisiert), eine Entscheidungsstufe zum Erzeugen einer binären Entscheidung (also einer zweiwertigen Entscheidung mit der Aussage ja oder nein) betreffend das Bestehen der Sichtverbindung nachgeschaltet. Die Entscheidungsstufe empfängt also die Aussagedaten betreffend die Wahrscheinlichkeit des Bestehens der direkten Sichtverbindung und erzeugt hieraus die binäre Entscheidung, die eine Aussage darstellt, dass entweder aktuell eine direkte Sichtverbindung besteht oder eben nicht. Eine Entscheidungsstufe kann beispielsweise auf der Grundlage eines Schwellenwertvergleichs der in den Aussagedaten angegebenen Wahrscheinlichkeit und/oder auf der Grundlage einer Bernoulli-Verteilung implementiert sein.

In der beschriebenen Weise wird in Abhängigkeit von dem Bestehen der direkten Sichtverbindung mittels der besagten Berechnungsvorschrift die Erfolgswahrscheinlichkeit für einen Übertragungsfehler entfernungsabhängig festgelegt. Auch diese Erfolgswahrscheinlichkeit wird bevorzugt in eine konkrete, das heißt eine binäre oder zweiwertige Aussage (Datenpaket kann erfolgreich dekodiert/rekonstruiert werden oder eben nicht, also die Aussage ja oder nein) umgewandelt. In einer Ausführungsform wird hierzu in dem Funkstreckenmodell aus der Erfolgswahrscheinlichkeit mittels eines Entscheidungsschritts eine binäre Aussage zu der Prognose betreffend dem Erfolg der Dekodierung/Rekonstruktion des Datenpakets erzeugt oder festgelegt. Dieser Entscheidungsschritt kann auf der Grundlage eines Schwellenwertvergleichs der ermittelten Erfolgswahrscheinlichkeit mit einem Schwellenwert erfolgen und/oder auf der Grundlage einer Bernoulli-Verteilung, mittels welcher der Erfolgswahrscheinlichkeit die konkrete binäre Aussage zuordnet wird. Somit liegt in vorteilhafter Weise in der Steuervorrichtung eine binäre Aussage dazu vor, ob das Datenpaket, wenn es mittels der aktuellen Kodierkonfiguration an das Empfängergerät übertragen würde, in diesem auch erfolgreich dekodiert und/oder rekonstruiert werden könnte.

In einer Ausführungsform wird entsprechend in dem Funkstreckenmodell die Prognose unabhängig von einer Rückmeldung des Empfängergeräts erzeugt. Das heißt die Entscheidung oder Prognose betreffend den Erfolg der Dekodierung/Rekonstruktion wird gefällt oder erzeugt, ohne dass aus Empfängergerät (bis auf dessen Lagedaten) Informationen betreffend die Dekodierung/Rekonstruktion notwendig sind.

Ist dann die Prognose negativ, so muss die Kodierkonfiguration geändert werden. Hierzu können mehrere auswählbare Kodierkonfigurationen bereitgestellt oder bei Bedarf erzeugbar sein. In einer Ausführungsform sieht dabei jede Kodierkonfiguration vor, dass durch zumindest einen Konfigurationsparameter (wie er durch die Kodierkonfiguration festgelegt wird) zumindest eine der folgenden Eigenschaften der Kanalkodierung eingestellt wird: eine Fehlerkorrektur-Kodierungstyp, ein Redundanzanteil der Kanalkodierung. Durch Variieren dieser Eigenschaften kann auf eine veränderliche Verkehrsumgebung und/oder eine veränderliche Relativlage von Sendegerät und Empfängergerät effektiv reagiert werden, um eine erfolgreiche Datenübertragung von Datenpaketen zu gewährleisten.

Bisher wurde beschrieben, dass stets nur in Richtung einer erweiterten Kodierkonfiguration umgeschaltet wird, das heißt die Redundanz bei der Übertragung gesteigert wird. In einer Ausführungsform wird mittels des Funkstreckenmodells überprüft, ob eine reduzierte Kodierkonfiguration möglich ist, also eine Kodierkonfiguration, welche eine geringere Redundanz als die jeweils aktuelle Kodierkonfiguration ergibt oder aufweist. Hierzu wird mittels der reduzierten Kodierkonfiguration ebenfalls die besagte Prognose des Erfolgs der Dekodierung /Rekonstruktion eines Datenpakets überprüft. Ergibt die Prognose auch bei reduzierter Kodierkonfiguration einen Erfolg einer Dekodierung/Rekonstruktion des Datenpakets, so wird in diesem Fall die reduzierte Kodierkonfiguration eingestellt und mittels der reduzierten Kodierkonfiguration das auszusendende Datenpaket ausgesendet. Somit kann also die Redundanz reduziert werden, wenn sich günstigere oder veränderte Übertragungsbedingungen ergeben.

Um das erfindungsgemäße Verfahren in einem Sendegerät durchzuführen, ist durch die Erfindung auch eine Steuervorrichtung für ein Sendegerät bereitgestellt. Die Sendevorrichtung weist eine Prozessoreinrichtung auf, die dazu eingerichtet ist, eine Ausführungsform des erfindungsgemäßen Verfahrens durchzuführen. Die Sendevorrichtung kann hierzu zumindest einen Prozessor und einen mit dem zumindest einen Prozessor gekoppelten Datenspeicher aufweisen. Ein Prozessor kann beispielsweise als Mikroprozessor oder Mikrocontroller oder ASIC (Application Specific Integrated Circuit) ausgestaltet sein. In dem Datenspeicher können computerlesbare Instruktionen gespeichert sein, die bei Ausführen durch den zumindest einen Prozessor diesen veranlassen, die Ausführungsform des erfindungsgemäßen Verfahrens durchzuführen. Bei dem Sendegerät kann es sich beispielsweise um ein Mobilfunkmodul (beispielsweise für LTE oder 5G) oder ein WLAN-Modul handeln.

Das erfindungsgemäße Verfahren lässt sich besonders vorteilhaft im Zusammenhang mit einer Fahrzeugkommunikation nutzen. Entsprechend ist durch die Erfindung auch ein Kraftfahrzeug mit einem Sendegerät zum Übertragen von Datenpaketen von dem Kraftfahrzeug aus hin zu einem fahrzeugexternen Empfängergerät bereitgestellt. In dem Sendegerät ist hierbei eine Ausführungsform der erfindungsgemäßen Steuervorrichtung bereitgestellt.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Die Erfindung umfasst auch die Kombinationen der Merkmale der beschriebenen Ausführungsformen.

Im Folgenden sind Ausführungsformen der Erfindung beschrieben. Hierzu zeigt:
- Fig. 1: eine schematische Darstellung einer Ausführungsform des erfindungsgemäßen Kraftfahrzeugs; und
- Fig. 2: ein Flussschaudiagramm zur Veranschaulichung einer Ausführungsform des erfindungsgemäßen Verfahrens.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

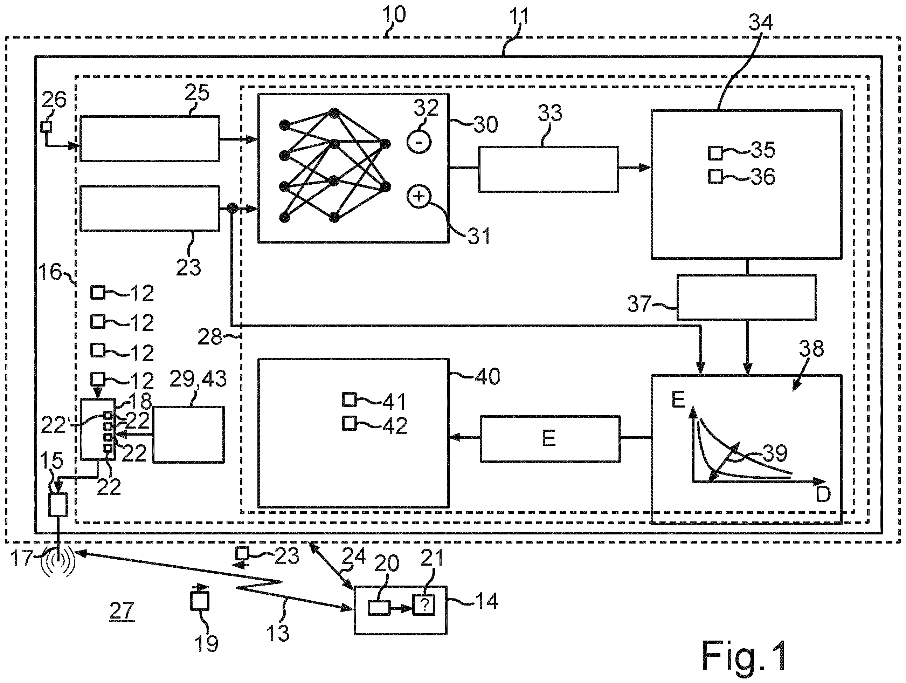

Fig. 1 zeigt ein Kraftfahrzeug 10, bei dem es sich beispielsweise um einen Kraftwagen, insbesondere einen Personenkraftwagen oder Lastkraftwagen, oder einen Personenbus handeln kann. In dem Kraftfahrzeug 10 kann ein Sendegerät 11 bereitgestellt sein, mittels welchem von dem Kraftfahrzeug 10 aus Datenpakete 12 nacheinander oder sequenziell über eine Funkstrecke oder Funkverbindung 13 an ein fahrzeugexternes Empfängergerät 14 übertragen werden können. Die Datenpakete 12 können beispielsweise Kommunikationsdaten (z.B. Sprachdaten eines Telefonats und/oder Daten einer Internetverbindung) und/oder Zustandsdaten (z.B. für die Navigation) enthalten, die von dem Sendegerät 11 hin zum Empfängergerät 14 übertragen werden sollen. Das Empfängergerät 14 kann beispielsweise ein anderes Kraftfahrzeug oder eine Station (Infrastrukturkomponente) sein.

Zum Übertragen der Datenpakete 12 über die Funkverbindung 13 können in dem Sendegerät 11 eine Sendeschaltung 15 und eine Steuerschaltung oder Steuervorrichtung 16 für die Sendeschaltung 15 vorgesehen sein. Die Sendeschaltung 15 kann in an sich bekannter Weise beispielsweise eine Antenne 17 oder mehrere Antennen betreiben. Durch die Steuervorrichtung 16 kann für die Funkübertragung über die Funkverbindung 13 eine Kanalkodierung 18 vorgesehen sein, durch welche ein auszusendendes Datenpaket 12 kodiert wird, um jeweils ein kodiertes Datenpaket 19 zu erhalten, welches über die Funkverbindung 13 mittels der Sendeschaltung 15 ausgesendet wird. Durch die Kanalkodierung 18 kann in an sich bekannter Weise den Daten der Datenpakete 12 eine Redundanz zugefügt oder ergänzt werden, durch welche eine Fehlererkennung und/oder eine Datenrekonstruktion durch eine Dekodierung 20 des Empfängergeräts 14 ermöglicht ist. Im Empfängergerät 14 kann durch die Dekodierung 20 ein kodiertes Datenpaket 19 in ein dekodiertes Datenpaket 21 umgewandelt werden. Hierbei wird dann anhand der Redundanzdaten, wie sie durch die Kanalkodierung 18 bereitgestellt werden, überprüft, ob eine fehlerfreie Rekonstruktion der Daten des Datenpakets 12 stattgefunden hat oder nicht. Die Redundanzdaten der Kanalkodierung 18 können in einem gemeinsamen kodierten Datenpaket 19 oder in zumindest einem zusätzlichen Datenpaket über die Funkverbindung 13 übertragen werden.

Die Kanalkodierung 18 kann mehrere unterschiedliche Kodierkonfigurationen 22 aufweisen, auf welche zurückgegriffen werden kann oder umgeschaltet werden kann in Abhängigkeit von einer Störanfälligkeit oder einer Störung der Funkverbindung 13. Eine davon kann eine aktuell eingestellte Kodierkonfiguration 22' sein. Um keine Rückmeldung aus dem Empfängergerät 14 abwarten zu müssen, können aus dem Empfängergerät 14 Lagedaten 23 empfangen werden, welche eine Relativlage 24 zwischen Sendegerät 11 und Empfängergerät 14 beschreiben können. Zusätzlich zu den Lagedaten 23 können durch die Steuervorrichtung 16 Umgebungsdaten 25 ermittelt werden, die beispielsweise auf Grundlage einer aktuellen Geoposition des Kraftfahrzeugs 10, wie sie durch einen Empfänger eines GNSS (Global Navigation Satellite System), beispielsweise des GPS (Global Positioning System), ermittelt werden können, aus einer digitalen Straßenkarte 26 entnommen werden. Die Umgebungsdaten 25 können zu der aktuellen Verkehrsumgebung 27, durch welche sich das Kraftfahrzeug 10 bewegt, angeben, welcher Umgebungsbeschaffenheit (beispielsweise ein Bebauungstyp (städtisch, ländlich) und/oder eine Bebauungsdichte und/oder eine mittlere Bebauungshöhe) in der Verkehrsumgebung 27 vorliegt.

Durch die Steuervorrichtung 16 kann ein Funkstreckenmodell 28 betrieben werden, durch welches in Abhängigkeit von den Umgebungsdaten 25 und den Lagedaten 23 Prognosedaten für eine Prognose 29 erzeugt werden können. Die Prognose 29 kann angeben, ob mit einer aktuellen Kodierkonfiguration 22', wie sie aktuell für das Erzeugen eines kodierten Datenpakets 19 vorgesehen oder eingestellt ist, auch tatsächlich erfolgreich ein vollständig rekonstruiertes Datenpaket 21 im Empfängergerät 14 erzeugt werden kann. Dies hängt davon ab, wie stark eine Störung auf der Funkstrecke oder Funkverbindung 13 ist.

Um diesen Grad der Störung auf der Funkverbindung 13 abzuschätzen, kann das Funkstreckenmodell 28 vorsehen, dass mittels eines künstlichen neuronalen Netzwerks 30 überprüft wird, ob eine direkte Sichtverbindung 31 oder nur eine indirekte Sichtverbindung 32 zwischen Sendegerät 11 und Empfängergerät 14 besteht. Das neuronale Netzwerk 30 kann hier vorsehen, lediglich eine entsprechende Wahrscheinlichkeitsangabe oder Aussagedaten 33 betreffend die Wahrscheinlichkeit eines Bestehens einer direkten Sichtverbindung (Sichtverbindungswahrscheinlichkeit) erzeugen. In einer nachgeschalteten Entscheidungsstufe 34 kann beispielsweise mittels einer Schwellenwertentscheidung 35 und/oder auf Basis einer Bernoulli-Verteilung 36 aus der Wahrscheinlichkeit gemäß den Aussagedaten 33 eine binäre Entscheidung 37 erzeugt werden. Entsprechende Entscheidungsdaten können angeben, dass die binäre Entscheidung 37 besagt, dass die direkte Sichtverbindung besteht oder dass keine Sichtverbindung besteht. Anstelle eines neuronalen Netzwerk 30 oder zusätzlich dazu kann beispielsweise auch auf eine Look-up-Tabelle und/oder ein Datenmodell genutzt werden.

Auf Grundlage der binären Entscheidung 37 und auf Grundlage der Lagedaten 23, insbesondere einer durch die Lagedaten beschriebenen Entfernung D zwischen dem Sendegerät 11 und dem Empfängergerät 14 kann vorgesehen sein, auf Grundlage einer Berechnungsvorschrift 38 eine Erfolgswahrscheinlichkeit E zu berechnen, die angibt, wie wahrscheinlich eine erfolglose oder nur fehlerbehaftete Rekonstruktion der Daten in dem dekodierten Datenpaket 21 sein würde, wenn die aktuelle Kodierungskonfiguration 22' verwendet würde.

Ein funktionaler Zusammenhang zwischen der Entfernung D und der Erfolgswahrscheinlichkeit E kann hierbei durch eine Parametrierung 39 eingestellt werden, welche umgeschaltet werden kann in Abhängigkeit von der binären Entscheidung 37 betreffend die direkte Sichtverbindung. Berechnungsvorschriften 38 für die Erfolgswahrscheinlichkeit E in Abhängigkeit von der Entfernung D und für eine direkte und eine indirekte Sichtverbindung können der Fachliteratur entnommen werden. Es können noch zusätzlich zur Entfernung D und der Information über die direkte/indirekte Sichtverbindung 31, 32 auch die Kommunikationstechnologie mit ihren Parametern (z.B. Nachrichtengröße [Byte], Sendeleistung [mW], Empfangssensitivität [dB]), und/oder die aktuelle Kanallast bei der Parametrierung 39 der Berechnungsvorschrift 38 zugrunde gelegt werden.

Auf Grundlage der Erfolgswahrscheinlichkeit kann durch einen nachgeschalteten Entscheidungsschritt 40 beispielsweise auf der Grundlage eines Schwellenwertvergleichs 41 und/oder auf Grundlage einer Bernoulli-Verteilung 42 eine binäre Aussage 43 erzeugt werden, die angibt, ob mittels der aktuellen Kodierkonfiguration 22' der Empfänger Erfolg haben wird, das mittels der aktuellen Kodierkonfiguration 22' kodierte Datenpaket erfolgreich zu dekodieren. Diese binäre Aussage 43 stellt dann also die besagte Prognose 29 dar.

Ist die Prognose negativ, so kann auf eine andere, erweiterte Kodierkonfiguration 22 umgeschaltet werden, die mehr Redundanzdaten (Redundanzbits) bei der Kanalkodierung 18 vorsieht als die aktuelle Kodierkonfiguration 22'. Ist dagegen die Prognose 29 positiv, so kann die aktuelle Kodierkonfiguration 22' verwendet werden oder es kann überprüft werden, ob mit einer reduzierten Kodierkonfiguration 22, welche weniger Redundanzdaten als die aktuelle Kodierkonfiguration 22' vorsieht, ebenfalls eine positive Prognose erhalten werden kann. Dann kann auch auf die reduzierte Kodierkonfiguration 22 zurückgegriffen werden.

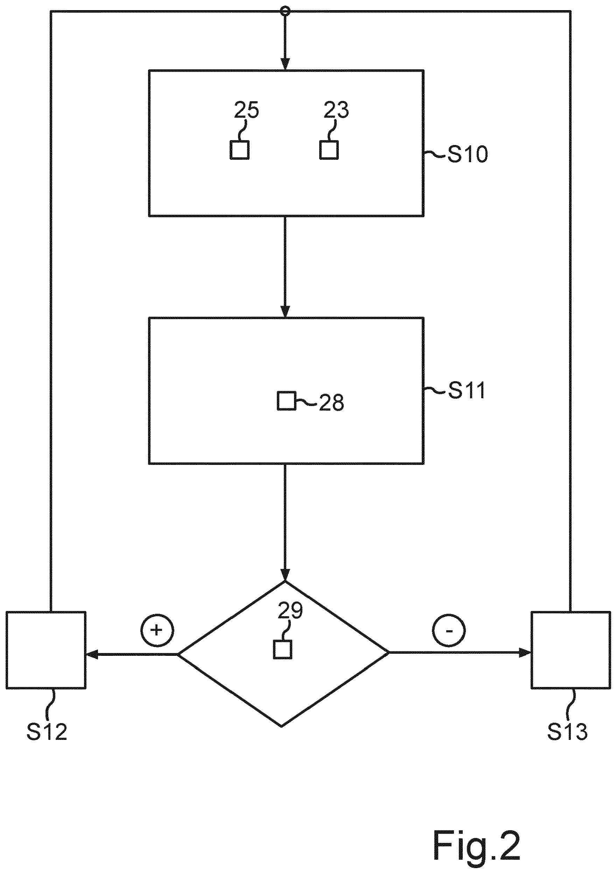

Fig. 2 veranschaulicht nochmal einen prinzipiellen Ablauf eines Verfahrens, wie er sich durch den Betrieb der Steuervorrichtung 16 ergeben kann. In der Steuervorrichtung 16 kann dieses Verfahren beispielsweise auf der Grundlage eines Programmcodes für eine Prozessoreinrichtung der Steuervorrichtung 16 realisiert sein. Insbesondere kann das besagte Funkstreckenmodell 28 auf der Grundlage eines Programmcodes realisiert sein.

Gemäß dem Verfahren kann in einem Schritt S10 die Umgebungsdaten 25 und die Lagedaten 23 ermittelt werden.

In einem Schritt S11 können mittels des Funkstreckenmodells 28 auf Grundlage der Umgebungsdaten 25 und der Lagedaten 23 die Prognose betreffend ein erfolgreiches Dekodieren/Rekonstruieren der Daten eines Datenpakets 12 ermittelt werden unter der Voraussetzung, dass eine aktuell eingestellte Kodierkonfiguration 22' verwendet wird.

Ist die Prognose positiv, ist also die aktuelle Kodierkonfiguration 22' ausreichend für eine erfolgreiche Übertragung, so kann in einem Schritt S12 das aktuell zu sendende Datenpaket 12 mittels der aktuellen Kodierkonfiguration 22' oder sogar mit einer reduzierten Kodierkonfiguration 22 in ein kodiertes Datenpaket 19 umgewandelt und ausgesendet werden. Ist dagegen die Prognose negativ, so kann in einem Schritt S13 auf eine erweiterte Kodierkonfiguration 22 umgeschaltet werden und das aktuell zu sendende Datenpaket 12 mittels der erweiterten Kodierkonfiguration 22 in ein kodiertes Datenpaket 19 umgewandelt und ausgesendet werden.

Sodann kann mit dem nächsten Datenpaket 12 fortgefahren werden, das heißt zum Schritt S12 zurückgekehrt werden. Die Aktualisierung der Prognose 29 kann für jedes zu sendende Datenpaket 12 oder für eine vorbestimmte Gruppe von Datenpaketen 12 vorgesehen sein.

Die Kodierkonfigurationen 22 können insbesondere einen Blind-HARQ-Prozess der Kanalkodierung 18 betreffen. Unter einem HARQ (Hybrid Automatic Repeat Request) Prozess versteht man eine Methodik, bei der Kanalcodierung und das zusätzliche Übermitteln von Redundanz zusammenwirken, um die Wahrscheinlichkeit einer erfolgreichen Dekodierung der übertragenen Information zu erhöhen. Beim Blind-HARQ wird die zusätzliche Redundanz nicht gezielt vom Empfänger angefordert, sondern der originalen Übertragung hinzugefügt. Die zusätzliche Redundanz im Blind-HARQ Prozess kann mittels des beschriebenen Verfahrens gering gehalten werden.

Die Idee in dem vorgestellten Verfahren ist, die Menge der übertragenen Information beim Blind-HARQ Prozess an eine zuvor geschätzte Erfolgswahrscheinlichkeit anzupassen. Die Schätzung der Erfolgswahrscheinlichkeit berücksichtigt die Bebauung und Topologie der Verkehrsumgebung 27, in der die Kommunikation stattfindet, sowie die verwendete Kommunikationstechnologie.

Der Vorteil des so geschaffenen adaptiven Blind-HARQ Prozesses liegt in der Reduktion der Kanallast gegenüber des bisherigen Blind-HARQ Prozesses bei gleich bleibendem Kommunikationserfolg und somit in der Aufhebung des beschriebenen Nachteils.

Ein neuronales Netz 30 wird dabei bevorzugt so trainiert, dass es anhand der Eigenschaften eines Umgebungsgebietes (Bebauung, Bepflanzung, Straßenverlauf, Höhenverlauf, ...), anhand der Eigenschaften einer Kommunikationstechnologie und/oder einer spezifischen örtlichen Sender-Empfänger-Beziehung zu einem Sendezeitpunkt die Wahrscheinlichkeit für eine direkte Sichtverbindung zwischen Sender und Empfänger in dieser Umgebung ausgibt. Die Sender-Empfänger-Beziehung wird geometrisch beschrieben, z.B. mittels Winkel, Distanz und Höhenunterschied zwischen Sender und Empfänger zum Sende-Zeitpunkt. Das künstliche neuronale Netz 30 kann für jeden Sendevorgang und jede Sender-Empfänger-Beziehung separat und in Echtzeit abgefragt werden. Das neuronale Netz kann online betrieben oder einmal vor der Verwendung für alle potenziellen Sender-Empfänger-Beziehungen abgefragt und das Ergebnis für mehrere unterschiedliche Ladedaten und Umgebungsdaten in einer Look-up Tabelle gespeichert werden.

Aus der vom künstlichen neuronalen Netz 30 ausgegebenen Sichtverbindungswahrscheinlichkeit zwischen Sender und Empfänger zum Sendezeitpunkt wird die Information über eine vorhandene oder nicht vorhandene Sichtverbindung als Entscheidung 37 generiert.

Ein Modell mit einer Berechnungsvorschrift 38 gibt die Erfolgswahrscheinlichkeit einer Sender-Empfänger-Beziehung zum Sendezeitpunkt abhängig von dem Vorhandensein einer ermittelten (Nicht-)Sichtverbindung zwischen Sender und Empfänger und der geometrischen Beziehung des Senders und Empfängers zueinander aus.

Aus der ermittelten Erfolgswahrscheinlichkeit E kann die Information über eine erfolgreiche oder nicht erfolgreiche Kommunikation zwischen dem betrachteten Sender und Empfänger zum analysierten Sendezeitpunkt generiert werden.

Das genannte Verfahren kann verwendet werden, um einen Blind-HARQ Prozess z.B. für V2X zu optimieren. Die Idee in dem vorgestellten Verfahren ist nun, die Menge der übertragenen Information beim Blind-HARQ Prozess durch die vorgestellte Methodik zur Schätzung der Erfolgswahrscheinlichkeit E anzupassen.

Insgesamt zeigen die Beispiele, wie durch die Erfindung eine Adaption eines Blind-HARQ-Prozesses für eine Fahrzeug-zu-X-Kommunikation (V2X) anhand einer geschätzten Erfolgswahrscheinlichkeit durchgeführt werden kann.

## Patentansprüche

1. Verfahren zum Konfigurieren einer Kanalkodierung (18) während einer Übertragung von Datenpaketen (12) von einem Sendegerät (11) hin zu einem Empfängergerät (14), die sich beide in einer Verkehrsumgebung (27) befinden und von denen sich zumindest eines bewegt, wobei durch eine Steuervorrichtung (16) des Sendegeräts (11):
Umgebungsdaten (25), welche eine vorbestimmte Umgebungsbeschaffenheit der Verkehrsumgebung (27) beschreiben, und Lagedaten (23), welche eine Relativlage (24) des Sendegeräts (11) und des Empfängergeräts (14) zueinander beschreiben, ermittelt werden,
anhand der Umgebungsdaten (25) und der Lagedaten (23) mittels eines vorbestimmten Funkstreckenmodells (28) durch eine Prognose (29) prognostiziert wird, ob sich mit einer aktuell eingestellten Kodierkonfiguration (22') der Kanalkodierung (18) ein aktuell zu versendendes Datenpaket (12) der Datenpakete (12) in dem Empfängergerät (14) erfolgreich dekodieren und/oder rekonstruieren lässt, und
falls die Prognose (29) keinen Erfolg signalisiert, auf eine erweiterte Kodierkonfiguration (22), welche eine größere Redundanz als die aktuelle Kodierkonfiguration (22') erzeugt, umgeschaltet wird und das zu versendende Datenpaket (12) mit der erweiterten Kodierkonfiguration (22) kodiert und versendet wird, **dadurch gekennzeichnet, dass**:
das Funkstreckenmodell (28) umfasst, dass eine Entscheidung betreffend ein Bestehen einer direkten Sichtverbindung (31) erzeugt wird, und, wenn das Bestehen der direkten Sichtverbindung (31) signalisiert wird, ein Parameter einer Berechnungsvorschrift (38) für eine entfernungsabhängige Erfolgswahrscheinlichkeit (E) betreffend das Dekodieren und/oder Rekonstruieren des Datenpakets (12) eingestellt wird, wobei das Bestehen der Sichtverbindung (31) in dem Funkstreckenmodell (28) mittels eines künstlichen neuronalen Netzwerks (30) ermittelt wird, welches drauf trainiert ist, den ermittelten Umgebungsdaten (25) und Lagedaten (23) Aussagedaten (33) betreffend eine Wahrscheinlichkeit des Bestehens der Sichtverbindung (31) zuzuordnen.

2. Verfahren nach Anspruch 1, wobei die Umgebungsdaten (25) eine oder mehrere oder jede der folgenden Umgebungsbeschaffenheiten angeben: eine Bebauungsdichte, eine mittlere Gebäudehöhe, einen Bebauungstyp der Verkehrsumgebung (27), durchschnittliche Straßenlänge, Anzahl der Straßen, Anzahl der Kurven, Anzahl der Kreuzungen, Anteil des Straßennetzes an der Landschaftsfläche, durchschnittliche Gebäudegrundfläche, Anzahl der Gebäude.

3. Verfahren nach einem der vorhergehenden Ansprüche, wobei die Lagedaten (23) betreffend die Relativlage (24) eine oder mehrere oder alle der folgenden Angaben enthalten: einen relative Sichtrichtungswinkeln, einen Höhenunterschied, eine Entfernung.

4. Verfahren nach einem der vorhergehenden Ansprüche, wobei in dem Funkstreckenmodell (28) dem künstlichen neuronalen Netzwerk (30) eine Entscheidungsstufe (34) zum Erzeugen einer binären Entscheidung (37) betreffend das Bestehen der Sichtverbindung (31) nachgeschaltet ist.

5. Verfahren nach einem der Ansprüche 1 bis 3, wobei in dem Funkstreckenmodell (28) aus der Erfolgswahrscheinlichkeit (E) mittels eines Entscheidungsschritts (40) eine binäre Aussage (43) als die Prognose (29) festgelegt wird.

6. Verfahren nach einem der vorhergehenden Ansprüche, wobei in dem Funkstreckenmodell (28) die Prognose (29) unabhängig von einer Rückmeldung des Empfängergeräts (14) erzeugt wird.

7. Verfahren nach einem der vorhergehenden Ansprüche, wobei jede Kodierkonfiguration (22) vorsieht, dass durch zumindest einen Konfigurationsparameter zumindest eine der folgenden Eigenschaften der Kanalkodierung (18) eingestellt wird: eine Fehlerkorrektur-Kodierungstyp, ein Redundanzanteil der Kanalkodierung.

8. Verfahren nach einem der vorhergehenden Ansprüche, wobei mittels des Funkstreckenmodells (28) überprüft wird, ob eine reduzierte Kodierkonfiguration (22), welche eine geringere Redundanz als die jeweils aktuelle Kodierkonfiguration (22') aufweist, eine Prognose (29) eines Erfolgs ergibt, und in diesem Fall die reduzierte Kodierkonfiguration (22) eingestellt wird.

9. Steuervorrichtung (16) für ein Sendegerät (11), wobei die Steuervorrichtung (16) eine Prozessoreinrichtung aufweist, die dazu eingerichtet ist, ein Verfahren nach einem der vorhergehenden Ansprüche durchzuführen.

10. Kraftfahrzeug (10) mit einem Sendegerät (11) zum Übertragen von Datenpaketen (12) von dem Kraftfahrzeug (10) aus hin zu einem fahrzeugexternen Empfängergerät (14), wobei in dem Sendegerät (11) eine Steuervorrichtung (16) nach Anspruch 9 bereitgestellt ist.

## Claims

1. A method for configuring a channel encoding (18) during a transfer of data packets (12) from a transmitting apparatus (11) towards a receiver apparatus (14), which are both in a traffic environment (27) and of which at least one moves, wherein, by a control device (16) of the transmitting apparatus (11):
environmental data (25), which describes a predetermined environmental character of the traffic environment (27), and position data (23), which describes a relative position (24) of the transmitting apparatus (11) and the receiver apparatus (14) to each other, are ascertained,
based on the environmental data (25) and the position data (23), by means of a predetermined radio link model (28), it is predicted by a prediction (29) if a data packet (12), currently to be sent, of the data packets (12) can be successfully decoded and/or reconstructed in the receiver apparatus (14) with a currently adjusted encoding configuration (22') of the channel encoding (18), and
if the prediction (29) does not signal success, it is switched to an extended encoding configuration (22), which generates a greater redundancy than the current encoding configuration (22'), and the data packet (12) to be sent is encoded with the extended encoding configuration (22) and sent,
**characterized in that**:
the radio link model (28) includes that a decision relating to an existence of a direct line of sight (31) is generated, and if the existence of the direct line of sight (31) is signaled, a parameter of a calculating rule (38) for a distance-dependent success probability (E) relating to decoding and/or reconstructing the data packet (12) is adjusted, wherein the existence of the line of sight (31) is ascertained in the radio link model (28) by means of an artificial neural network (30), which is trained to associate statement data (33) relating to a probability of the existence of the line of sight (31) with the ascertained environmental data (25) and position data (23).

2. The method according to claim 1, wherein the environmental data (25) specifies one or more or each of the following environmental characters: a development density, a mean building height, a development type of the traffic environment (27), average road length, number of the roads, number of the curves, number of the crossroads, proportion of the road network in the landscape area, average building footprint, number of the buildings.

3. The method according to any one of the preceding claims, wherein the position data (23) relating to the relative position (24) contains one or more or all of the following specifications: a relative viewing direction angle, a height difference, a distance.

4. The method according to any one of the preceding claims, wherein a decision stage (34) for generating a binary decision (37) relating to the existence of the line of sight (31) is arranged downstream of the artificial neural network (30) in the radio link model (28).

5. The method according to any one of claims 1 to 3, wherein a binary statement (43) is set as the prediction (29) from the success probability (E) by means of a decision step (40) in the radio link model (28).

6. The method according to any one of the preceding claims, wherein the prediction (29) is generated independently of a feedback of the receiver apparatus (14) in the radio link model (28).

7. The method according to any one of the preceding claims, wherein each encoding configuration (22) provides that at least one of the following characteristics of the channel encoding (18) is adjusted by at least one configuration parameter: an error correction encoding type, a redundancy portion of the channel encoding.

8. The method according to any one of the preceding claims, wherein it is examined by means of the radio link model (28) if a reduced encoding configuration (22), which has a lower redundancy than the respectively current encoding configuration (22'), results in a prediction (29) of success, and the reduced encoding configuration (22) is adjusted in this case.

9. A control device (16) for a transmitting apparatus (11), wherein the control device (16) comprises a processor device, which is configured to perform a method according to any one of the preceding claims.

10. A motor vehicle (10) with a transmitting apparatus (11) for transferring data packets (12) from the motor vehicle (10) towards a receiver apparatus (14) external to vehicle, wherein a control device (16) according to claim 9 is provided in the transmitting apparatus (11).

## Revendications

1. Procédé de configuration d'un codage de canal (18) pendant une transmission de paquets de données (12) d'un appareil émetteur (11) vers un appareil récepteur (14), lesquels se trouvent tous deux dans un environnement de trafic (27) et parmi lesquels au moins l'un se déplace, un dispositif de commande (16) de l'appareil émetteur (11) :
identifiant des données d'environnement (25), lesquelles décrivent une propriété d'environnement prédéterminée de l'environnement de trafic (27), et des données de position (23), lesquelles décrivent une position relative (24) de l'appareil émetteur (11) et de l'appareil récepteur (14) l'un par rapport à l'autre, prévoyant, par une prévision (29), à l'aide des données d'environnement (25) et des données de position (23) au moyen d'un modèle de trajet radioélectrique (28) prédéterminé, si un paquet de données (12) actuellement à émettre des paquets de données (12) peut être décodé et/ou reconstruit avec succès dans l'appareil récepteur (14) avec une configuration de codage actuelle (22') réglée du codage de canal (18), et
dans le cas où la prévision (29) ne signale pas de réussite, basculant sur une configuration de codage étendue (22), laquelle génère une redondance plus grande que la configuration de codage actuelle (22'), et codant puis envoyant le paquet de données (12) à envoyer avec la configuration de codage étendue (22),
**caractérisé en ce que** :
le modèle de trajet radioélectrique (28) comprend qu'une décision concernant l'existence d'un contact visuel direct (31) est générée et, lorsque l'existence du contact visuel direct (31) est signalée, un paramètre d'une prescription de décision (38) pour une probabilité de succès (E) dépendante de la distance concernant le décodage et/ou la reconstruction du paquet de données (12) est réglé, l'existence du contact visuel (31) dans le modèle de trajet radioélectrique (28) étant identifiée au moyen d'un réseau neuronal artificiel (30) qui est entraîné pour affecter aux données d'environnement (25) et aux données de position (23) identifiées des données d'affirmation (33) concernant la probabilité de l'existence du contact visuel (31).

2. Procédé selon la revendication 1, les données d'environnement (25) indiquant une ou plusieurs ou chacune des propriétés d'environnement suivantes : une densité de construction d'édifices, une hauteur de bâtiment médiane, un type de construction d'édifices de l'environnement de trafic (27), une longueur de route moyenne, le nombre de routes, le nombre de virages, le nombre d'intersections, la part du réseau routier à la surface du paysage, la surface au sol de bâtiment moyenne, le nombre de bâtiments.

3. Procédé selon l'une des revendications précédentes, les données de positions (23) qui concernent la position relative (24) contenant une ou plusieurs ou la totalité des indications suivantes : un angle de direction du regard relatif, une différence de hauteur, une distance.

4. Procédé selon l'une des revendications précédentes, un étage de décision (34) destiné à générer une décision binaire (37) concernant l'existence du contact visuel (31) étant connecté à la suite du réseau neuronal artificiel (30) dans le modèle de trajet radioélectrique (28) .

5. Procédé selon l'une des revendications 1 à 3, une affirmation binaire (43) étant fixée en tant que prévision (29) au moyen d'une étape de décision (40) dans le modèle de trajet radioélectrique (28) à partir de la probabilité de succès (E).

6. Procédé selon l'une des revendications précédentes, la prévision (29) étant générée dans le modèle de trajet radioélectrique (28) indépendamment d'une information de retour de l'appareil récepteur (14).

7. Procédé selon l'une des revendications précédentes, chaque information de codage (22) prévoyant qu'au moins l'une des propriétés suivantes du codage de canal (18) est réglée par au moins un paramètre de configuration : un type de codage de correction d'erreur, une part de redondance du codage de canal.

8. Procédé selon l'une des revendications précédentes, un contrôle étant effectué au moyen du modèle de trajet radioélectrique (28) afin de vérifier si une configuration de codage réduite (22), laquelle présente une redondance inférieure à celle de la configuration de codage actuelle (22'), produit une prévision (29) d'un succès et, dans ce cas, la configuration de codage réduite (22) étant réglée.

9. Dispositif de commande (16) pour un appareil émetteur (11), le dispositif de commande (16) possédant un appareil processeur qui est conçu pour mettre en œuvre un procédé selon l'une des revendications précédentes.

10. Véhicule automobile (10) comprenant un appareil émetteur (11) destiné à la transmission de paquets de données (12) depuis le véhicule automobile (10) vers un appareil récepteur (14) externe au véhicule, un dispositif de commande (16) selon la revendication 9 étant fourni dans l'appareil émetteur (11).
